# EUROPÄISCHE PATENTSCHRIFT

(11) **EP 0 916 552 B1**
(45) Veröffentlichungstag und Bekanntmachung des Hinweises auf die Patenterteilung: **04.09.2002**
(21) Anmeldenummer: 98121339.0
(22) Anmeldetag: 10.11.1998
(51) Int. Cl.: B60R 21/13

(54) **Ausfahrbarer Überrollbügel für Kraftfahrzeuge**
Raisable roll bar for vehicles
Arceau de sécurité déployable pour véhicules

(30) Priorität: 15.11.1997 DE 19750693
(43) Veröffentlichungstag der Anmeldung: 19.05.1999
(73) Patentinhaber: ISE Innomotive Systems Europe GmbH, 51702 Bergneustadt (DE)
(72) Erfinder: Nowack, Reinhard, 57489 Drolshagen (DE); Zupancic, Manuela, 51702 Bergneustadt (DE); Hartebrodt, Raphael, 57489 Drolshagen (DE)
(74) Vertreter: Fuchs Mehler Weiss & Fritzsche

(56) Entgegenhaltungen:
- EP-A- 0 729 867
- EP-A- 0 760 314
- WO-A-95/03952
- DE-A- 3 905 470

## Beschreibung

Die Erfindung betrifft ein Überrollschutzsystem für Kraftfahrzeuge, bestehend aus einem geführten Überrollkörper und einer mit ihm in antreibender Wirkverbindung stehenden Druckfeder zum Ausfahren des Überrollkörpers aus einer abgesenkten Ruhelage in eine obere Stützlage im Crash-Fall, mit
- einer lösbaren Haltevorrichtung zum Halten des Überrollkörpers bei vorgespannter Druckfeder in der abgesenkten Ruhelage, die in direkter Wirkverbindung mit einem am Überrollbügel befestigten Halteglied steht,
- einem Aktuator für das Lösen der Haltevorrichtung im Crash-Fall, sowie
- einer von der Haltevorrichtung unabhängigen Verriegelungseinrichtung als Wiedereinfahrsperre bei ausgefahrenem Überrollbügel.

Derartige ausfahrbare Überrollkörper, insbesondere in Form von Überrollbügeln, wie sie beispielsweise aus der gattungsbildenden EP-A-0 729 867 bekannt geworden sind, finden bei Cabrio-Fahrzeugen Verwendung, bei denen aus optischen Gründen auf einen starren, d.h. fest eingebauten Überrollbügel, verzichtet wird.

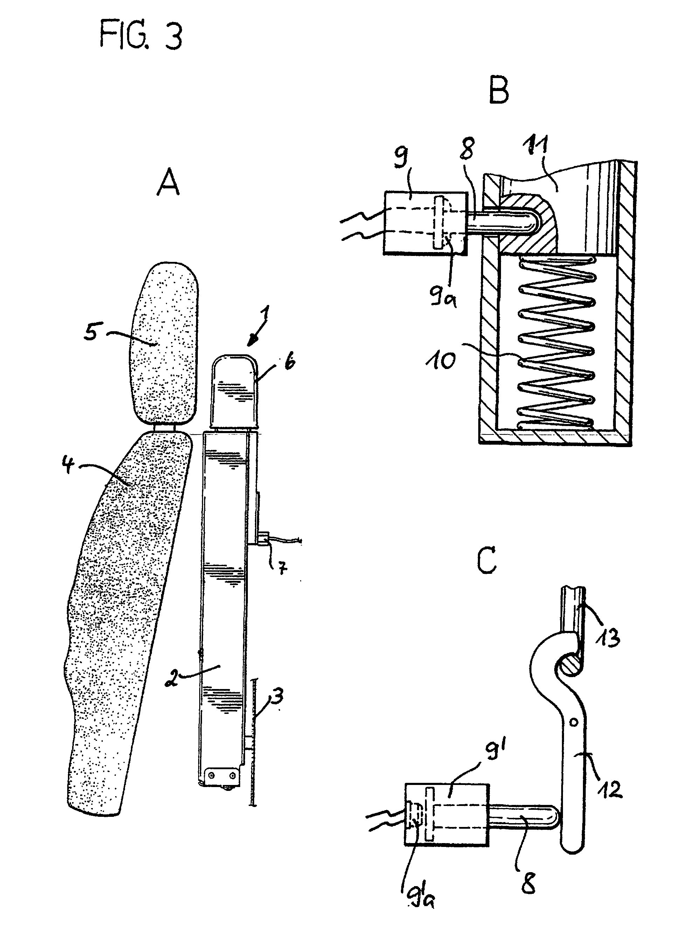

Die Fig. 3 zeigt im Teil A die bekannte Anordnung eines Überrollbügels im Fahrzeug. Der Überrollbügel 1 ist mit einer Blechkassette 2, die sein Außengehäuse bildet, beispielsweise an der Hinterwand 3 des Fahrzeuges, eines Cabriolets, befestigt. Er befindet sich unmittelbar hinter der Rückenlehne 4 mit einer Kopfstütze 5 der Fahrzeugsitze. Die Blechkassette 2 schließt nach oben etwa bündig mit der Rückenlehne 4 ab. In Höhe der zugehörigen Kopfstütze 5 befindet sich im eingefahrenen Zustand der mit einer Bügelabdeckung 6 aus hartem Kunststoff versehene Querbügel des Überrollbügels, über den das Fahrzeug im Überschlagsfall abrollt. Dieser Querbügel bildet zusammen mit rohrförmigen Holmen den Überrollkörper, der mit seinen Holmen in einem in dem oberen Teil der Blechkassette 2 befestigten Führungsblock in Verbindung mit am Boden der Kassette befestigten Standrohren ein- und ausfahrbar geführt ist.

Im Überrollfall wird der Überrollkörper, veranlaßt durch einen entsprechenden Sensor, Auslöser und Antrieb nach oben ausgefahren. In der ausgefahrenen Stellung befindet sich dabei der Querbügel deutlich oberhalb der Kopfstütze und schützt somit die Köpfe der angeschnallten Fahrzeuginsassen bei einem Überschlag.

Durch die Hinterwand 3 ragt dabei ein die Ausfahrbewegung auslösendes pyrotechnisches Kraftelement 7, welches damit auf einfache Weise nach einem Crash-Fall ausgewechselt werden kann.

Überrollbügel der vorgenannten Art sind in manigfaltigen Ausführungsformen hinsichtlich der konstruktiven Gestaltung der Kassette, des Überrollkörpers, der lösbaren Haltevorrichtung und des zugehörigen Aktuators, der Wiedereinfahrsperre sowie des den Überrollkörper ausfahrenden Antriebssystem, bekanntgeworden. Beispielhaft sei neben der bereits erwähnten EP-A-0 729 867 auf die DE 43 42 401 A1 sowie die DE 195 23 790 A1 hingewiesen, die Antriebe mittels eines Gasgenerators und eines Kolben-Zylindersystems sowie mittels einer vorgespannten Druckfeder zeigen, in Verbindung mit einem pyrotechnischen Zündsatz oder einem Crash-Magnet mit Verriegelungshebel als Auslösesystem für den Antrieb, d.h. als Teil der lösbaren Haltevorrichtung.

Die Fig. 3, Teil B zeigt in einer stark vergrößerten Darstellung ein bekanntes direkt einwirkendes Auslösesystem mit einer einen Stift 8 auslösenden Patrone 9 mit einem pyrotechnischen Zündsatz 9a in Verbindung mit einer vorgespannten Druckfeder 10 für den Antrieb des Überrollkörpers, der über ein Element 11 des Überrollkörpers mit dem Stift 8 direkt verriegelt ist. Bei einer Überschlagsgefahr wird der pyrotechnische Zündsatz 9a gezündet, es entsteht innerhalb der Patrone 9 eine schnelle Gasexpansion, deren Kraft den Stift 8 nach links drückt, wodurch das Halten des Überrollbügels aufgehoben wird und dieser mittels der Druckfeder 10 impulsartig ausgefahren wird.
Die Fig. 3 Teil C zeigt ebenfalls in einer stark vergrößerten Darstellung eine indirekte Auslösung der lösbaren Haltevorrichtung, mit einer sogenannten stiftausstoßenden pyrotechnischen Patrone 9' mit einem Zündsatz 9'a, die den Stift 8 im Auslösefall gegen einen Verriegelungshebel 12 drückt, der im Normalfall mit einem mit dem Überrollbügel verbundenen bolzenartigen Glied 13 verklinkt ist und der im Crash-Fall entklinkt wird. Der vereinfachten Darstellung wegen ist dabei im Teil C der Antrieb des Überrollbügels mittels einer Druckfeder 10 nicht dargestellt.

Auch ist der Einfachheit halber nicht die von der lösbaren Haltevorrichtung unabhängige Verriegelungseinrichtung als Wiedereinfahrsperre bei ausgefahrenem Überrollübel, die typischerweise aus einer Zahnstange und einer Zahnklinke besteht, dargestellt.

Sowohl im Fall der Darstellung nach Fig. 3 B als auch im Fall der Darstellung nach Fig. 3 C kann die pyrotechnische Patrone durch einen sogenannten Crash-Magneten ersetzt werden, d.h. einen Elektromagneten, der im Crash-Fall mit Strom aus dem Bordnetz beaufschlagt wird und den Verriegelungs- und Auslösestift 8 betätigt.

Damit die antreibende Druckfeder 10 den Überrollbügel mit der notwendigen Geschwindigkeit antreibt, steht sie unter einer relativ hohen Vorspannung.

Dadurch besteht im Fall der direkten Auslösung nach Fig. 3 B zwischen dem Stift 8 und dem Element 11 sowie im Fall der indirekten Auslösung nach Fig. 3 C zwischen der Kröpfung des Verriegelungshebels 12 und dem Halteglied 13 eine hohe Klemm-Reibkraft, was im Auslösefall eine hohe, von dem Auslösesystem aufzubringende Kraft bedingt. So muß in den beiden dargestellten Fällen der Treibsatz bzw. die zugehörige Patrone entsprechend groß dimensioniert werden; im Fall eines Crash-Magneten werden entsprechend hohe Ströme benötigt, die das Bordnetz des Kraftfahrzeuges stark belasten.

Der Erfindung liegt die Aufgabe zugrunde, ausgehend von dem eingangs bezeichneten ausfahrbaren Überrollbügel diesen hinsichtlich der lösbaren Haltevorrichtung so auszugestalten, daß im Crash-Fall die vom Aktuator zur Entriegelung der Druckfeder des Federantriebes für den Überrollbügel aufzubringenden Kräfte bei ausreichender Stellkraft kleiner als bei den vergleichbaren bekannten Konstruktionen sein können.

Die Lösung dieser Aufgabe gelingt gemäß der Erfindung durch ein Überrollschutzsystem für Kraftfahrzeuge, bestehend aus einem geführten Überrollkörper und einer mit ihm in antreibender Wirkverbindung stehenden Druckfeder zum Ausfahren des Überrollkörpers aus einer abgesenkten Ruhelage in eine obere Stützlage im Crash-Fall, mit
- einer lösbaren Haltevorrichtung zum Halten des Überrollkörpers bei vorgespannter Druckfeder in der abgesenkten Ruhelage, die in direkter Wirkverbindung mit einem am Überrollbügel befestigten Halteglied steht,
- einem Aktuator für das Lösen der Haltevorrichtung im Crash-Fall, sowie
- einer von der Haltevorrichtung unabhängigen Verriegelungseinrichtung als Wiedereinfahrsperre bei ausgefahrenem Überrollbügel,

bei dem eine zweistufige Haltevorrichtung in Form eines Doppelhebelsystems mit zwei in mechanischer Wirkverbindung miteinander stehenden Hebeln vorgesehen ist, mit einem Haltehebel, der in einem Grundkörper um eine Achse drehbar angebracht ist, an einem Ende einen Klinkenfortsatz für den Wirkeingriff mit dem Halteglied am Überrollkörper besitzt, sowie der im öffnenden Sinne vorgespannt ist, und mit einem Auslösehebel, der ebenfalls in dem Grundkörper um eine Achse drehbar angebracht ist, der an einem Ende einen Klinkenfortsatz für einen Wirkeingriff mit dem freien Ende des Haltehebels besitzt, sowie dem der Aktuator zum Lösen des Wirkeingriffes des Auslösehebels mit dem Haltehebel zugeordnet ist, der an dem Grundkörper angebracht ist, wobei die Hebelarme so ausgebildet sind, daß die an der Wirkverbindung zwischen dem Halteglied am Überrollkörper und dem Haltehebel wirkende Klemm-Reibkraft an der mechanischen Wirkverbindung beider Hebel untersetzt ist.

Durch die erfindungsgemäßen Maßnahmen kann eine kompakte Halte- und Auslösevorrichtung, die nur relativ kleine Auslösekräfte benötigt, geschaffen werden. Durch das Doppelhebelsystem gelingt es, die Reibkraft, die an der Wirkverbindung zwischen dem Haltebolzen, der an dem Überrollbügel (indirekt) befestigt ist, und dem von dem Aktuator betätigbaren Haltehebel aufgrund der nicht unerheblichen Vorspannung der antreibenden Druckfedern besteht, zu untersetzen, damit der Aktuator sicher auslösen kann.

Durch die DE 39 05 470 A1 ist an sich eine zweistufige Halte- und Verriegelungseinrichtung in Form eines Zweifach-Doppelhebelsystems mit jeweils zwei in mechanischer Wirkverbindung stehenden Hebeln bekannt geworden. Ein dreiarmig ausgebildeter Hebel besitzt dabei jeweils zwei Vorsprünge für einen Wirkeingriff mit Aussparungen im zugeordneten Bügelschenkel und dem fahrzeugfesten Standrohr, in welchem der Bügelschenkel geführt ist, wogegen der andere Hebel jeweils die Verbindung zum mittig angeordneten Aktuator herstellt.

Die Konstruktion ist dabei so getroffen, daß im eingefahrenen Zustand des Überrollbügels einer der Vorsprünge des dreiarmigen Hebels, der Halte-Vorsprung, mit einer Aussparung im Standrohr unter Bildung der Haltefunktion in Wirkverbindung steht, und daß im Auslösefall durch Verschwenken des mit dem Aktuator in Verbindung stehenden Hebels der dreiarmige Hebel freigegeben wird, der durch Verschwenken zum einen durch Lösen des Halte-Vorsprunges den Überrollbügel freigibt und zum anderen mit dem zweiten Vorsprung, dem Verriegelungsvorsprung, durch eine Wirkverbindung mit einer Aussparung im Standrohr die Verriegelung gegen das Wiedereinfahren bewirkt.

Im bekannten Fall geht es allein darum, eine Konstruktion zu haben, mit der eine Doppelfunktion ausgeübt werden kann, nämlich die Haltefunktion für das Halten des Überrollbügels in dem Ruhezustand, und die Verriegelungsfunktion für das Sperren des Wiedereinfahrens des ausgefahrenen Überrollbügels. Im bekannten Fall ist daher zu beiden Seiten des mittig zwischen beiden Bügelschenkeln angeordneten Aktuators nur deshalb jeweils ein Zweifach-Hebelsystem vorgesehen, weil jeweils die halbe Bügelbreite von den Hebeln überspannt werden muß, damit ein Wirkeingriff mit den Schenkeln und den Standrohren möglich ist, d.h., weil bei einem einfachen Hebel dessen Arm offenbar zu lang sein würde, um die notwendige Schwenkbewegung für das Auslösen zu ermöglichen.

Auch ist im Fall der Erfindung ein separates Halteglied, typischerweise ein in einer Haltegabel aufgenommener Haltebolzen, über die Haltegabel an dem Überrollbügel befestigt, vorgesehen, wogegen im Fall der vorgenannten DE-Schrift kein separates Halteglied vorgesehen ist, sondern in den Standrohren des Überrollbügels Ausnehmungen ausgebildet sind.

Ferner ist im Fall der Erfindung diese Haltevorrichtung eine völlig von der Wiedereinfahrsperre getrennte Komponente, d.h. stellt eine gesonderte, unabhängige Komponente des Überrollbügelsystems dar, wogegen die bekannte Konstruktion beide Funktionen in sich vereinigt, was zu einer komplexen, mit großen Sicherheitsrisiken verbundenen Konstruktion führt, im Gegensatz zum Gegenstand der Erfindung, der zu einer in der Praxis bewährten, vielfach eingesetzten Konstruktion geführt hat.

Im Fall der Erfindung sind die beiden Hebel des einzigen Doppelhebelsystems in einem Grundkörper drehbar angebracht, wodurch sich die kompakte Ausbildung der auslösbaren Haltevorrichtung ergibt, in Verbindung mit dem am Gehäuse befestigten Aktuator. Im bekannten Fall sind dagegen zwei Doppelhebelsysteme vorgesehen, die die gesamte Bügelbreite überspannen, d.h. nicht kompakt in einem Grundkörper untergebracht sind. Ferner sind im Fall der Erfindung auch die Hebel anders als im Fall der Entgegenhaltung ausgebildet. Sie besitzen hakenförmige Fortsätze zum Wirkeingriff mit dem separaten Haltebolzen bzw. dem freien Ende des Haltehebels. Derartige Fortsätze sind aufgrund der unterschiedlichen Funktion der Hebelsysteme im bekannten Fall nicht vorhanden.

Die Vorspannung des Haltehebels bei dem erfindungsgemäßen Überrollsystem ist auf unterschiedliche Art und Weise konstruktiv realisierbar. Eine erste Ausführungsform besteht darin, daß die Vorspannung des Haltehebels durch einen seitlichen Mittenversatz seiner Drehachse gegenüber dem Halteglied am Überrollkörper aufbringbar ist. Bei dieser Ausführungsform werden keine zusätzlichen Teile benötigt.

Alternativ oder unterstützend besteht eine zweite Ausführungsform darin, daß eine vorgespannte Drehfeder vorgesehen ist, die am Grundkörper befestigt ist und mit dem Haltehebel im entklinkenden Sinne in Wirkeingriff steht.

Mit dieser Ausführungsform können die vom Halteelement am Überrollkörper auf den Haltehebel ausgeübten Querkräfte verringert werden.

Auch der Aktuator des Auslösesystems kann auf verschiedene Weise realisiert werden. So kann gemäß einer ersten Ausgestaltung der Erfindung der Aktuator einen durch einen in einer Patrone gezündeten pyrotechnischen Treibsatz oder durch einen Auslöse-Elektromagneten betätigten Stift aufweisen, der auf den Auslösebehebel im Crash-Fall im entriegelten Sinne einwirkt.

Gemäß einer weiteren Ausgestaltung der Erfindung ist auch eine stiftfreie Auslösung möglich, wenn der Aktuator einen Auslöse-Elektromagneten in Verbindung mit einem magnetisierten Abschnitt im Auslösehebel aufweist.

Der eingeschaltete Elektromagnet kann dann stiftfrei auf den Auslösehebel im entriegelten Sinne einwirken.

Weitere ausgestaltende Merkmale und Vorteile der Erfindung ergeben sich anhand von zwei in den Zeichnungen dargestellten Ausführungsbeispielen. Es zeigen:
- Fig. 1: in einer schematisierten Schnittdarstellung eine erste Ausführungsform eines Doppelhebel-Halte- und Auslösesystems mit Auslösung durch einen Stift,
- Fig. 2: in einer weiteren schematisierten Schnittdarstellung ein zweites Ausführungsbeispiel eines Doppelhebel-Halte- und Auslösesystems mit einer stiftfreien Auslösung über einen Crash-Magneten, wobei im Teil A der verriegelte Zustand und im Teil B der entriegelte, d.h. ausgelöste Zustand, dargestellt ist, und
- Fig. 3: im Teil A die bekannte Anordnung eines ausfahrbaren Überrollbügels hinter den Fahrzeugsitzen und in den Teilen B und C zwei verschiedene Ausführungsformen von bekannten Halte- und Auslösesystemen.

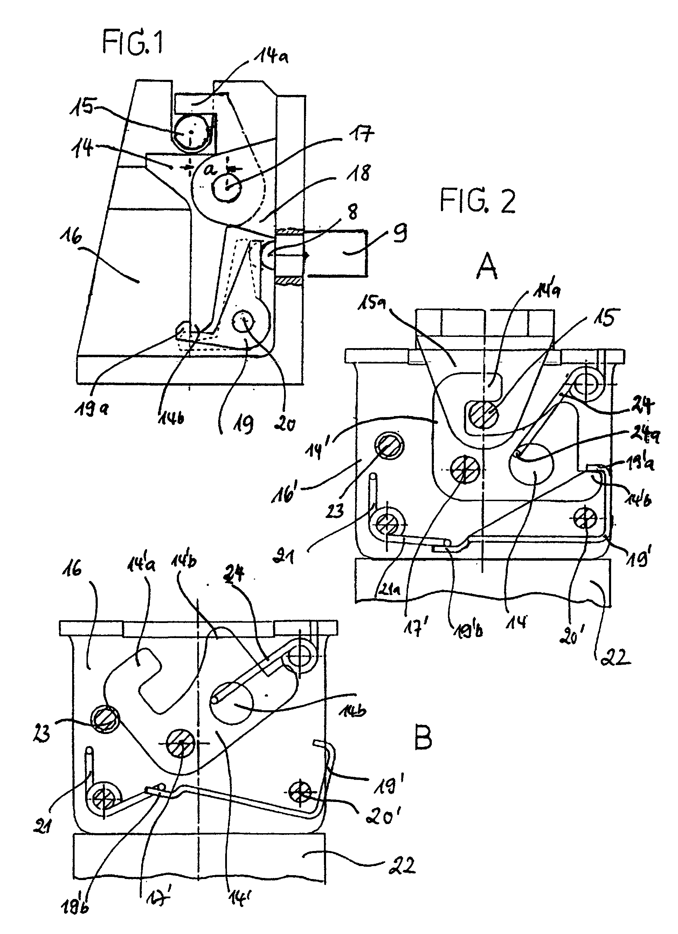

Die Fig. 1 zeigt in einer schematischen Darstellung eine Haltevorrichtung mit einem Auslösesystem für einen ausfahrbaren Überrollbügel, bestehend aus einem stiftbetätigten Doppelhebel-Halte- und Auslösesystem. Dieses Doppelhebel-Halte- und Auslösesystem weist einen Haltehebel 14 auf, der mittels eines hakenförmigen Klinkenfortsatzes 14a mit einem Haltebolzen 15, dem Halteglied, am Überrollkörper entsprechend der Darstellung in Fig. 3 C verklinkt ist. Auf den Klinkenfortsatz 14 a übt daher der Haltebolzen 15 eine durch die vorgespannte Druckfeder des Antriebes aufgebrachte Kraft aus. Dieser Haltehebel 14 ist drehbar um die Achse 17 über eine laschenartige Halterung 18 an einem Grundkörper 16 in einer den Überrollkörper und seinen Federantrieb aufnehmenden Blechkassette analog Fig. 3 A angebracht. Das Zentrum der Achse 17 ist dabei um den Abstand "a" von dem Zentrum des Haltebolzens 15 seitlich versetzt. Dadurch wird durch die Federkraft des Druckfederantriebes auf den Haltehebel 14 ein im entklinkenden Sinne wirkendes Moment ausgeübt.

Das Doppelhebelsystem weist ferner einen Auslösehebel 19 auf, der um die Achse 20 drehbar an dem Grundkörper 16 befestigt ist, und der mit einem hakenförmigen Klinkenfortsatz 19a mit dem Haltehebel 14 an dessen freiem Ende 14b verklinkt ist.

Das Auslösesystem besitzt ferner einen symbolisch dargestellten Aktuator 9 mit einem Auslösestift 8, der in Wirkverbindung mit dem freien Ende des Auslösehebels 19 steht. Der Auslösestift 8 kann mittels einer Patrone mit einem Treibsatz analog der Fig. 3 C oder mittels eines Elektro-Crash-Magneten im Crash-Fall betätigt werden.

Wird der Stift 8 durch einen den Crash-Fall erfassenden Sensor ausgelöst, so schnellt er aus dem Aktuator 9 und drückt den Auslösehebel 19 nach links in die gestrichelt dargestellte Position. Dadurch gibt sein Klinkenfortsatz 19a den Haltehebel 14 frei, der seinerseits durch die am Bolzen 15 wirkende Kraft der vorgespannten Druckfeder des Federantriebes für den Überrollbügel verschwenkt wird, derart, daß sein Klinkenfortsatz 14a den Haltebolzen 15 am Überrollbügel frei gibt, wodurch der Überrollbügel mittels seines Druckfederantriebes aus der Kassette ausgefahren wird.

Durch die vorgespannte Antriebs-Druckfeder in Verbindung mit den entsprechend abgestimmten Hebelarm-Längen ist die Klemmkraft zwischen dem Verklinkungsfortsatz 19a des Auslösehebels 19 und dem Hebelende 14b des Haltehebels 14 kleiner als die Klemmkraft zwischen dem Verklinkungsfortsatz 14a und dem Haltebolzen 15, der durch den Druckfederantrieb des Überrollbügels mit einer vorgegebenen Kraft gegen den Klinkenfortsatz 14a des Haltehebels gedrückt wird. Dadurch ist die Auslösekraft, die der Auslösestift 8 auf den Auslösehebel 19 aufbringen muß, wesentlich kleiner als im bekannten Fall nach den Fig. 3 B und C, wodurch im Fall einer pyrotechnischen Patrone ein kleinerer Treibsatz und im Fall eines Crash-Magneten weniger elektrische Energie benötigt wird.

Das Auslösesystem ist dabei so konstruiert, daß sich die Auslösezeit nicht vergrößert sowie daß es nach einer Auslösung nicht automatisch in die Ausgangsstellung zurückspringt, d.h. die Reversierung erfolgt durch eine äußere Kraft auf den Verriegelungshebel 14 gegen die Kraft der Druckfeder des Federantriebes des Überrollbügels.

Die Fig. 2 zeigt eine zweite Ausführungsform des erfindungsgemäßen Doppelhebelsystems in zwei Zuständen. Der Zustand A ist der Ruhezustand, der Zustand B der ausgelöste Zustand.

In Fig. 2 A ist der Klinken-Fortsatz 14'a des Haltehebels 14' mit dem Bolzen 15 am Halte-Ende 15a des Überrollbügels verklinkt. Da im Falle der Ausführung nach Fig. 2 der Mittenversatz der Drehachse 17' des Haltehebels 14 gegenüber dem Bolzen 15 kleiner als im Fall der Fig. 1 ist ist eine vorgespannte Hilfs-Drehfeder 24 vorgesehen, die mit einem Ende am Grundkörper 16' befestigt ist, und mit ihrem freien Ende 24 a an einer Öffnung 14'c im Haltehebel anliegt, derart, daß sie den Haltehebel 14' um seine Achse 17' im entklinkenden Sinne verdrehen will.

Der um die Achse 20' am Grundkörper 16' drehbar angebrachte Auslösehebel 19' ist bügelförmig ausgebildet und steht mit seinem flachen umgebördelten Klinken-Fortsatz 19'a mit einem Klinkenanschlag 14'b des Haltehebels 14' in verriegelnder Wirkverbindung. Diese Wirkverbindung wird durch eine Drehfeder 21, die mit einem Ende am Grundkörper 16' befestigt ist und deren freies Ende 21a auf dem freien, einen magnetisierten Abschnitt 19'b aufweisenden Ende des Auslösehebels 19' aufliegt und diesen nach unten drückt, hergestellt.

Unterhalb des Auslösehebels 19' befindet sich ein Auslöse-Elektromagnet 22, der Crash-Magnet als Aktuator, der im eingeschalteten Zustand den magnetisierten Abschnitt am Ende 19'b des Auslösehebels 19' nach oben drückt und damit, wie in Fig. 2 B dargestellt, die Verklinkung mit dem Haltehebel 14' frei gibt. Dadurch wird dieser unter Aufhebung der Verklinkung mit dem Haltebolzen 15 am Überrollkörper mittels des von der Druckfeder des Überroll-Antriebes ausgeübten Momentes, unterstützt durch die vorgespannte Hilfe-Drehfeder 24, um die Achse 17' in die in Fig. 2 B gezeigte Lage gegen einen Anschlag 23 verdreht.

Auch bei der in Fig. 2 dargestellten Ausführungsform ist, unterstützt durch die potentielle Energie der vorgespannten Drehfeder 24 und die Hebelverhältnisse, die Klemm-Reibkraft an der Verklinkung 14'b und 19'a des Auslösehebels 19' mit dem Haltehebel 14' kleiner als an der Verklinkung des Haltehebels 14' mit dem Bolzen 15.

Anstelle der magnetischen Wirkverbindung zum Auslösehebel 19' kann auch ein Auslösestift vorgesehen sein, der auf die Unterseite des Auslösehebels 19' einwirkt und diesen im Crash-Fall nach oben treibt.

## Patentansprüche

1. Überrollschutzsystem für Kraftfahrzeuge, bestehend aus einem Überrollkörper (1) sowie einer Blechkassette (2) mit einem Führungskörper für den Überrollkörper und einer mit ihm in antreibender Wirkverbindung stehenden Druckfeder (10) zum Ausfahren des Überrollkörpers aus einer abgesenkten Ruhelage in eine obere Stützlage im Crash-Fall, mit
- einer lösbaren Haltevorrichtung (14, 19, 15; 14', 24, 19', 15) zum Halten des Überrollkörpers (1) bei vorgespannter Druckfeder (10) in der abgesenkten Ruhelage, die in direkter Wirkverbindung mit einem am Überrollbügel (1) befestigten Halteglied (15) steht,
- einem Aktuator (8, 9; 22) für das Lösen der Haltevorrichtung im Crash-Fall, sowie
- einer von der Haltevorrichtung unabhängigen Verriegelungseinrichtung als Wiedereinfahrsperre bei ausgefahrenem Überrollbügel,
**dadurch gekennzeichnet, daß** eine zweistufige Haltevorrichtung in Form eines Doppelhebelsystems (14,19) mit zwei in mechanischer Wirkverbindung miteinander stehenden Hebeln, einem Halte- (14) und einem Auslösehebel (19), vorgesehen ist,
von denen der Haltehebel (14, 14'), der in einem Grundkörper (16, 16') um eine Achse (17, 17') drehbar angebracht ist, an einem Ende einen Klinkenfortsatz (14a, 14'a) für den Wirkeingriff mit dem Halteglied (15) am Überrollkörper (1) besitzt, sowie der im öffnenden Sinne vorgespannt ist, und von denen der Auslösehebel (19, 19'), der ebenfalls in dem Grundkörper (16, 16') um eine Achse (20, 20') drehbar angebracht ist, an einem Ende einen Klinkenfortsatz (19a, 19'a) für einen Wirkeingriff mit dem freien Ende (14b, 14'b) des Haltehebels (14, 14') besitzt, sowie dem der Aktuator (8, 9; 22) zum Lösen des Wirkeingriffes des Auslösehebels (19, 19') mit dem Haltehebel (14, 14') zugeordnet ist, wobei die Hebelarme in ihrer Länge so ausgebildet sind, daß die an der Wirkverbindung zwischen dem Halteglied (15) am Überrollkörper und dem Haltehebel (14, 14') wirkende Klemm-Reibkraft an der mechanischen Wirkverbindung beider Hebel untersetzt ist.

2. Überrollbügel nach Anspruch 1, **dadurch gekennzeichnet, daß** die Vorspannung des Haltehebels (14) durch einen seitlichen Mittenversatz seiner Drehachse (17) gegenüber dem Halteglied (15) am Überrollkörper aufbringbar ist.

3. Überrollschutzsystem nach Anspruch 1 oder 2, **dadurch gekennzeichnet, daß** eine vorgespannte Drehfeder (24) vorgesehen ist, die am Grundkörper (16') befestigt ist und mit dem Haltehebel (14') im entklinkenden Sinne in Wirkeingriff steht.

4. Überrollschutzsystem nach einem der Ansprüche 1 bis 3, **dadurch gekennzeichnet, daß** der Aktuator (9) einen durch einen in einer Patrone gezündeten pyrotechnischen Treibsatz oder durch einen Auslöse-Elektromagneten betätigten Stift (8) aufweist, der auf den Auslösehebel (19) im Crash-Fall im entriegelten Sinne einwirkt.

5. Überrollschutzsystem nach einem der Ansprüche 1 bis 3, **dadurch gekennzeichnet, daß** der Aktuator (9) einen Auslöse-Elektromagneten (22) in Verbindung mit einem magnetisierten Abschnitt (19'b) im Auslösehebel (19') aufweist.

## Claims

1. Roll-over protective system for motor vehicles, comprising a roll-over member (1) and a sheet metal casing (2) having a guide member for the roll-over member and a compression spring (10), which is operatively connected thereto in a driving manner, for extending the roll-over member out of a lowered rest position into an upper support position in the event of a crash, having
- a releasable holding apparatus (14, 19, 15; 14', 24, 19', 15) for holding the roll-over member (1) with the compression spring (10) pretensioned in the lowered rest position which is operatively connected directly to a holding element (15) which is fixed to the roll-over hoop (1),
- an actuator (8, 9; 22) for the release of the holding apparatus in the event of a crash, and
- a locking device, which is independent of the holding apparatus, acting as a means for preventing retraction when the roll-over hoop is extended,
**characterised in that** a two-phase holding apparatus in the form of a double lever system (14, 19) is provided with two levers, a holding lever (14) and an activation lever (19), which are operatively connected mechanically to each other, of which the holding lever (14, 14'), which is fitted in a base member (16, 16') to rotate about an axis (17, 17'), has at one end a catch extension (14a, 14'a) for operative engagement with the holding element (15) on the roll-over member (1), and which is pretensioned in the opening sense, and of which the activation lever (19, 19'), which is also fitted in the base member (16, 16') to rotate about an axis (20, 20'), has at one end a catch extension (19a, 19'a) for operative engagement with the free end (14b, 14'b) of the holding lever (14, 14'), and with which is associated the actuator (8, 9; 22) for releasing the operative engagement of the activation lever (19, 19') with the holding lever (14, 14'), the lever arms being constructed in such a manner in terms of the length thereof that the stick-slip force, which acts on the operative connection between the holding element (15) on the roll-over member and the holding lever (14, 14'), is reduced at the mechanical operative connection of both levers.

2. Roll-over hoop according to claim 1, **characterised in that** the pretension of the holding lever (14) can be applied to the roll-over member by a lateral centre offset of the axis of rotation (17) thereof relative to the holding element (15).

3. Roll-over protective system according to claim 1 or 2, **characterised in that** there is provided a pretensioned torsion spring (24) which is fixed to the base member (16') and which is operatively engaged with the holding lever (14') in the disengaging sense.

4. Roll-over protective system according to any one of claims 1 to 3, **characterised in that** the actuator (9) has a pin (8) which is activated by a pyrotechnic propellant charge which is ignited in a cartridge or by an activating electromagnet, which acts on the activation lever (19) in the unlocked sense in the event of a crash.

5. Roll-over protective system according to any one of claims 1 to 3, **characterised in that** the actuator (9) has an activating electromagnet (22) connected to a magnetised portion (19'b) in the activation lever (19').

## Revendications

1. Système d'arceau de sécurité pour des véhicules, comprenant un corps de sécurité (1) et une cassette en tôle (2) avec un corps de guidage pour le corps de sécurité et un ressort de pression (10) en liaison active d'entraînement avec lui pour le déploiement du corps de sécurité d'une position de repos abaissée dans une position de support supérieure en cas de collision, avec
- un dispositif de maintien (14, 19, 15 ; 14', 24, 19', 15) détachable pour le maintien du corps de sécurité (1) avec un ressort de pression (10) précontraint dans la position de repos abaissée, qui est en liaison active directe avec un élément de maintien (15) fixé sur l'arceau de sécurité (1),
- un actionneur (8, 9 ; 22) pour le détachement du dispositif de maintien en cas de collision, et
- un système de verrouillage,indépendant du dispositif de maintien, comme blocage du réenclenchement avec un arceau de sécurité déployé,
**caractérisé .en ce qu'**un dispositif de maintien à deux niveaux est prévu sous la forme d'un système de double levier (14, 19) avec deux leviers se trouvant en liaison active mécanique l'un avec l'autre, un levier de maintien (14) et un levier de déclenchement (19),
dont le levier de maintien (14, 14'), qui est monté rotatif dans un corps de base (16, 16') autour d'un axe (17, 17'), présente sur une extrémité un prolongement de cliquet (14a, 14'a) pour l'engrènement actif avec l'élément de maintien (15) sur le corps de sécurité (1), et qui est précontraint dans le sens d'ouverture, et dont le levier de déclenchement (19, 19'), qui est également monté rotatif dans le corps de base (16, 16') autour d'un axe (20, 20'), présente sur une extrémité un prolongement de cliquet (19a, 19'a) pour un engrènement actif avec l'extrémité libre (14b, 14'b) du levier de maintien (14, 14'), et est attribué à l'actionneur (8, 9 ; 22) pour le détachement de l'engrènement actif du levier de déclenchement (19, 19') avec le levier de maintien (14, 14'), les bras de levier étant conçus de longueur telle que la force de frottement avec serrage agissant sur la liaison active entre l'élément de maintien (15) sur le corps de sécurité et le levier de maintien (14, 14') soit démultipliée sur la liaison active mécanique des deux leviers.

2. Arceau de sécurité selon la revendication 1, **caractérisé en ce que** la précontrainte du levier de maintien (14) peut être appliquée sur le corps de sécurité par un désaxage latéral de son axe de rotation (10) par rapport à l'élément de maintien (15).

3. Arceau de sécurité selon la revendication 1 ou 2, **caractérisé en ce qu'**il est prévu un ressort de torsion (24) précontraint, qui est fixé sur le corps de base (16') et est en engrènement actif avec le levier de maintien (14') dans le sens du désencliquetage.

4. Arceau de sécurité selon l'une quelconque des revendications 1 à 3, **caractérisé en ce que** l'actionneur (9) comporte une goupille (8) actionnée par une composition d'amorçage pyrotechnique allumée dans une cartouche ou par un électro-aimant de déclenchement, qui, en cas de collision agit sur le levier de déclenchement (19) dans le sens déverrouillé.

5. Arceau de sécurité selon l'une quelconque des revendications 1 à 3, **caractérisé en ce que** l'actionneur (9) présente un électro-aimant de déclenchement (22) en liaison avec une partie (19'b) magnétisée dans le levier de déclenchement (19').
